# EUROPÄISCHE PATENTSCHRIFT

(11) **EP 0 662 252 B1**
(45) Veröffentlichungstag und Bekanntmachung des Hinweises auf die Patenterteilung: **15.09.1999**
(21) Anmeldenummer: 94920967.0
(22) Anmeldetag: 04.07.1994
(51) Int. Cl.: H01M 8/24, H01M 8/02

(54) **VERFAHREN UND VORRICHTUNG ZUR VERRINGERUNG DER MIT DEN LECKSTRÖMEN VERBUNDENEN ENERGIEVERLUSTE ELEKTROCHEMISCHER ZELLEN**
PROCESS AND DEVICE FOR REDUCING ENERGY LOSSES OF ELECTROCHEMICAL CELLS DUE TO LEAKAGE CURRENTS
PROCEDE ET DISPOSITIF PERMETTANT DE REDUIRE LES PERTES D'ENERGIE DE CELLULES ELECTROCHIMIQUES DUES A DES COURANTS DE FUITE

(30) Priorität: 20.07.1993 CH 218293
(43) Veröffentlichungstag der Anmeldung: 12.07.1995
(73) Patentinhaber: KLAUS HERRMANN AKTIENGESELLSCHAFT, 58239 Schwerte (DE)
(72) Erfinder: BOSSEL, Ulf, Dr., CH-5400 Baden (CH)
(74) Vertreter: Patentanwälte Meinke, Dabringhaus und Partner
(86) Internationale Anmeldenummer: EP9402181
(87) Internationale Veröffentlichungsnummer: WO9503638

(56) Entgegenhaltungen:
- EP-A- 0 273 427
- EP-A- 0 338 823
- EP-A- 0 521 830
- US-A- 4 259 389
- PATENT ABSTRACTS OF JAPAN vol. 14 no. 515 (E-1000) ,13.November 1990 & JP,A,02 215051 (TOSHIBA CORP) 28.August 1990,
- PROC. OF THE 2TH INTERN. SYMP. ON SOLID OXIDE FUEL CELLS - 2-5 JULY GREECE - EUR 13564, 1991 Seiten 127-134, M. DOKIYA ET AL 'WET PROCESS FOR PLANAR SOFC'
- PATENT ABSTRACTS OF JAPAN vol. 16 no. 389 (E-1250) ,19.August 1992 & JP,A,04 126365 (ISHIKAWAJIMA HARIMA HEAVY IND CO) 27.April 1992,
- PATENT ABSTRACTS OF JAPAN vol. 13 no. 312 (E-788) (3660) ,17.Juli 1989 & JP,A,01 084578 (ISHIKAWAJIMA HARIMA HEAVY IND CO) 29.März 1989,
- PATENT ABSTRACTS OF JAPAN vol. 15 no. 444 (E-1132) ,12.November 1991 & JP,A,03 190056 (TOSHIBA CORP) 20.August 1991,
- PATENT ABSTRACTS OF JAPAN vol. 13 no. 574 (E-863) (3922) ,19.Dezember 1989 & JP,A,01 241757 (TOSHIBA CORP) 19.Dezember 1989,
- PATENT ABSTRACTS OF JAPAN vol. 17 no. 450 (E-1416) ,18.August 1993 & JP,A,05 101837 (MITSUBISHI HEAVY IND LTD) 23.April 1993,

## Beschreibung

### Technisches Gebiet

Elektrochemische Zellen zur Umwandlung chemischer Energie in elektrische Energie und umgekehrt. Insbesondere Brennstoffzellen zur direkten Umwandlung des chemischen Potentials eines gasförmigen Brennstoffs in elektrische Energie.

Die Erfindung bezieht sich auf die Dichtungsprobleme und die Leckstellen in den Randzonen von elektrochemischen Zellen und die damit in Verbindung stehenden Stoff- und Energieverluste. Diese stellen besonders bei einer Vielzahl plattenförmiger Zellen ein konstruktiv-technisch und energetisch-oekonomisch nicht zu vernachlässigendes Thema dar.

Im engeren Sinne betrifft die Erfindung ein Verfahren zur Verringerung der an den Stosstellen und Randpartien im Dichtungsbereich der Elektroden und des Elektrolyten einer elektrochemischen Zelle auftretenden, durch Leckstoffströme und Leckenergieströme auftretenden Stoffund Exergieverluste.

Die Erfindung betrifft ferner eine Vorrichtung zur Durchführung des Verfahrens in einer elektrochemischen Zelle oder in einem Stapel oder einer anderen Anordnung bestehend aus einer Vielzahl elektrochemischer Zellen.

### Stand der Technik

Bei allen elektrochemischen Zellen ganz gleich welcher Art und welchen zur Anwendung gelangenden Verfahrens treten an gewissen Stellen Stoffverluste und Exergieverluste auf. Dies bezieht sich vor allem auf Stosstellen und Randpartien, wo entsprechende Verluste durch Leckstoffströme und Leckenergieströme beobachtet werden. Die entsprechenden Erscheinungen haben einen Rückgang der Stromausbeute, unerwünschte chemische Reaktionen, schädliche Wärmeentwicklung und im extremen Fall örtliche Explosionsgefahr zur Folge. Die Sicherheit des Betriebes der Zelle oder der Zellenanordnung muss durch möglichst gute Dichtungen an den kritischen Stellen gewährleistet werden. Es handelt sich somit im vorliegenden Fall vor allem um die Lösung eines Dichtungsproblems. Die Praxis zeigt indessen, dass zufolge beschränkten zur Verfügung stehenden Raumes, Anpressdruckes und eingeschränkter Freiheit für den Konstrukteur keine Dichtung auf die Dauer vollkommen ist.

Es stellt sich daher das Bedürfnis ein, die durch Leckströme verursachten Verluste sowohl an Materie wie an Energie sowie die eventuell damit im Zusammenhang stehenden Unsicherheiten und Gefahren durch weitere Massnahmen zu begrenzen. Diese Forderung ist umso gerechtfertigter, als die klassischen Dichtungen zusätzlichen toten Raum beanspruchen, materialtechnische Schwierigkeiten verursachen und im allgemeinen aufwendig und kostspielig sind.

Zum Stand der Technik werden die folgenden Dokumente zitiert:
- O. Antonsen, W. Baukal und W. Fischer, "HochtemperaturBrennstoffbatterie mit keramischem Elektrolyten". Brown Boveri Mitteilungen Januar/Februar 1966, Seiten 21-30,
- US-A-4692274
- US-A-4395468
- US-A-4214969
- US-A-4039409
- US-A-4326943
- DE-A-2905168

Die bei bisherigen elektrochemischen Zellen üblichen herkömmlichen Dichtungskonzepte befriedigen nicht. Insbesondere in Anbetracht der beabsichtigten Zukunftsentwicklung der Brennstoffzellen in Richtung grossindustrielle Fertigung und Verwendung besteht ein grosses Bedürfnis nach Vervollkommnung und Vereinfachung und optimaler konstruktiver Gestaltung der beteiligten Bauelemente.

### Darstellung der Erfindung

Es ist Aufgabe der Erfindung, ein Verfahren und eine Vorrichtung anzugeben, womit die Leck-Energieverluste im Dichtungsbereich von Elektroden und Elektrolyt elektro-chemischer Zellen namhaft gesenkt und ggf. ganz vermieden werden können. Das Verfahren sowie die zu dessen Durchführung bedingten konstruktiven Änderungen der elektro-chemischen Zelle oder eines ganzen Zellenverbandes sollen sich universell auf möglichst alle gängigen Typen und Konstruktionen elektro-chemischer Zellen, insbesondere auf Brennstoffzellen anwenden lassen, einfach zu bewerkstelligen sein und keine oder nur geringe Mehrkosten, womöglich sogar Minderkosten verursachen.

Diese Aufgabe wird mit einem Verfahren der eingangs bezeichneten Art durch die kennzeichnenden Merkmale des Anspruches 1 gelöst.

Dadurch, daß die Erfindung auf den Versuch verzichtet, die Randpartien elektro-chemischer Zellen möglichst dicht zu gestalten, sondern im Gegenteil ein Durchströmen der Reaktanden zuläßt, wird erreicht, daß die in den Leckageströmen noch erhaltene Energie genutzt werden kann.

Zur Lösung der Aufgabe sieht die Erfindung auch eine elektro-chemische Zelle vor und eine Vorrichtung aus einer Vielzahl derartiger Zellen.

### Weg zur Ausführung der Erfindung

Die Erfindung wird anhand der nachfolgenden, durch Figuren näher erläuterten Ausführungsbeispiele beschrieben.

Dabei zeigt:
- Fig. 1: eine perspektivische Darstellung/Aufriss-Schnitt einer plattenförmigen elektrochemischen Zelle (Plattenebene horizontal) mit Dichtungsbereich,
- Fig. 2: einen schematischen Schnitt (Aufriss) durch eine Hochtemperatur-Brennstoffzelle mit keramischem Feststoffelektrolyt auf ZrO₂-Basis,
- Fig. 3: einen schematischen Schnitt (Aufriss) durch eine Brennstoffzelle mit perfluoriertem sulfoniertem Kationenaustauscher (Kunststoff-Polymer) als Feststoffelektrolyt,
- Fig. 4: einen schematischen Schnitt (Aufriss) durch eine Brennstoffzelle mit H₃PO₄ als Flüssigelektrolyt,
- Fig. 5: einen schematischen Schnitt (Aufriss) durch eine Brennstoffzelle mit einer eutektischen Schmelze von Li₂CO₃/K₂CO₃ als Flüssigelektrolyt,
- Fig. 6: einen schematischen Schnitt (Aufriss) durch eine Brennstoffzelle mit KOH als Flüssigelektrolyt.

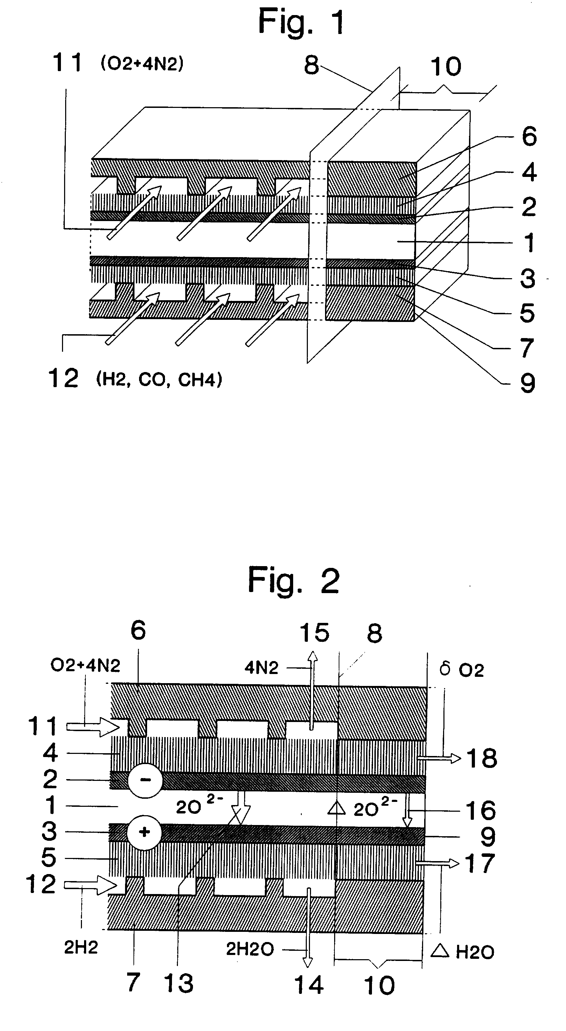

Fig. 1 ist eine perspektivische Darstellung/Aufriss-Schnitt einer plattenförmigen elektrochemischen Zelle (Plattenebene horizontal). Diese Figur stellt den allgemeinsten Fall einer elektrochemischen Zelle dar, die sowohl als separate Einzelzelle wie als Einzelzellen-Ausschnitt aus einem Stapel einer Vielzahl von Zellen betrachtet werden kann. Entsprechend der Bedeutung der Erfindung ist in diesem grundsätzlichen Beispiel eine Brennstoffzelle dargestellt. Sie besteht aus dem Elektrolyten 1 (allgemein), der im vorliegenden Betriebsfall negativ (- ) geladenen Sauerstoffelektrode 2 und der positiv (+) geladenen Brennstoffelektrode 3. Zur Stromleitung und Stromverteilung im Bereich der Elektroden 2 und 3 dienen die Stromkollektoren 4 (Sauerstoffseite) und 5 (Brennstoffseite). 6 stellt den mit Kanälen versehenen Teil der Bipolarplatte auf der Sauerstoffseite, 7 den entsprechenden Teil auf der Brennstoffseite dar. Bei einem Stapel einer Vielzahl von Zellen sind Teil 6 und Teil 7 selbstverständlich eine monolithische Einheit, die zwei benachbarte Zellen trennt. 8 stellt die Grenzfläche der Reaktandenzufuhr im Bereich der Bipolarplatten 6; 7 dar, d.h. dies ist der äusserste Bereich in dem den Elektroden 2; 3' die gasförmigen Medien zugeführt werden. 9 ist die äusserste Kante der Randpartie der Bipolarplatte 6 (bzw. 7), die zugleich den Abschluss des Stapels der Zellen bildet und mit dem Ende der "Dichtung" zusammenfällt. Entsprechend ist 10 die Randpartie der Bipolarplatte, deren Breite der sonst herkömmlichen "Dichtungsbreite" gemäss Stand der Technik entspricht. 11 stellt die Zufuhr des gasförmigen Sauerstoffträgers, 12 die Zufuhr des gasförmigen Brennstoffs dar. Der Sauerstoffträger besteht im allgemeinen aus Luft, technisch reinem Sauerstoff oder an Sauerstoff angereicherter Luft (O₂; N₂), der Brennstoff aus H₂, CO, CH₄, CₙHₘ oder einer Mischung aus mindestens zweien dieser Stoffe.

In Fig. 2 ist ein schematischer Schnitt (Aufriss) durch eine Hochtemperatur-Brennstoffzelle mit keramischem Feststoffelektrolyt auf ZrO₂-Basis dargestellt. Die Bezugszeichen 1 bis 12 entsprechen im wesentlichen denjenigen der Figur 1. Im vorliegenden Fall besteht der Elektrolyt 1 aus dotiertem stabilisierten ZrO₂ und befindet sich auf einer Betriebstemperatur von durchschnittlich ca. 850°C. Die poröse Sauerstoffelektrode 2 besteht aus einem mit SrO dotierten La/Mn-Perowskit, während die ebenfalls poröse Brennstoffelektrode 3 aus einem Ni/ZrO₂-Cermet besteht. Die Stromkollektoren 4 (Sauerstoffseite) und 5 (Brennstoffseite) bestehen in der Regel aus Drahtgeflechten, Metallgeweben, Vliesen etc. einer hochwarmfesten hochchromhaltigen Nickelbasislegierung bzw. aus Nickel (vorzugsweise oxyddispersionsgehärtet), während die Bipolarplatte 6, 7 vorteilhafterweise aus einer zunderbeständigen Nickel- oder Eisenbasislegierung besteht. Die Randpartie 10 der letzteren wird durch die strichpunktiert angedeutete Grenzfläche 8 der Reaktanden-Zufuhr (gasförmige Medien) und durch die ebenso angedeutete Kante 9 begrenzt. Der gesamte aktive Teil der Zelle, insbesondere der Feststoffelektrolyt 1 und die Elektroden 2; 3 setzt sich bis zur Kante 9 der Bipolarplatte 6, 7 fort. Die durch die Kanäle in der Bipolarplatte, Sauerstoffseite 6 erfolgende Zufuhr 11 des Sauerstoffträgers ist schematisch von aussen durch den Pfeil O₂ +4N₂ (Luft) angedeutet. Desgleichen die durch die Kanäle in der Bipolarplatte, Brennstoffseite 7 erfolgende Zufuhr 12 des Brennstoffs durch den Pfeil2H₂. Der Feststoffelektrolyt 1 ist bei hohen Temperaturen ein Leiter für Sauerstoffionen. Mit 13 ist der im vorliegenden Fall auf der Plattenebene senkrecht stehende elektrische Feldstärkevektor bezeichnet, was gleichzeitig die Wanderungsrichtung der negativen Ladungsträger (Pfeil2O²⁻) im Elektrolyt im aktiven Bereich der Zelle wiedergibt. 14 ist die Abfuhr des Reaktionsproduktes (im vorliegenden Fall2H₂O) im aktiven Kernbereich der Zelle. Dies ist schematisch mit einem nach unten weisenden Pfeil angedeutet, um zu verdeutlichen, dass diese Abfuhr noch innerhalb des aktiven Kernbereichs der Zelle auf der Brennstoffseite der Bipolarplatte 7 erfolgt. Die Abfuhr 15 (und die in gewissen Fällen erfolgende Abfuhr des Ueberschuss-Sauerstoffträgers; in der Figur 2 nicht eingezeichnet) des Ballaststickstoffs erfolgt ebenfalls im Kernbereich der Zelle, was mit einem nach oben weisenden Pfeil (4N₂) angedeutet ist. 16 stellt den elektrischen Feldstärkevektor und die Wanderungsrichtung der negativen Ladungsträger (Pfeil Δ₂O²⁻) im Elektrolyt im Bereich der Randpartie 10 der Bipolarplatte dar. Ueber diese Randpartie 10 der Bipolarplatte Brennstoffseite 7 tritt durch den Stromkollektor 5 parallel zur Plattenebene der energielose Teil-Leckstoffstrom 17 (Pfeil Δ H₂O) aus. Ein analoger energieloser Teil-Leckstoffstrom 18 (Pfeil δO₂) tritt im Bereich der Randpartie der Bipolarplatte Sauerstoffseite 6 aus. Letzterer enthält gegebenenfalls noch zusätzlich Ballaststickstoff (in der Figur 2 nicht eingezeichnet).

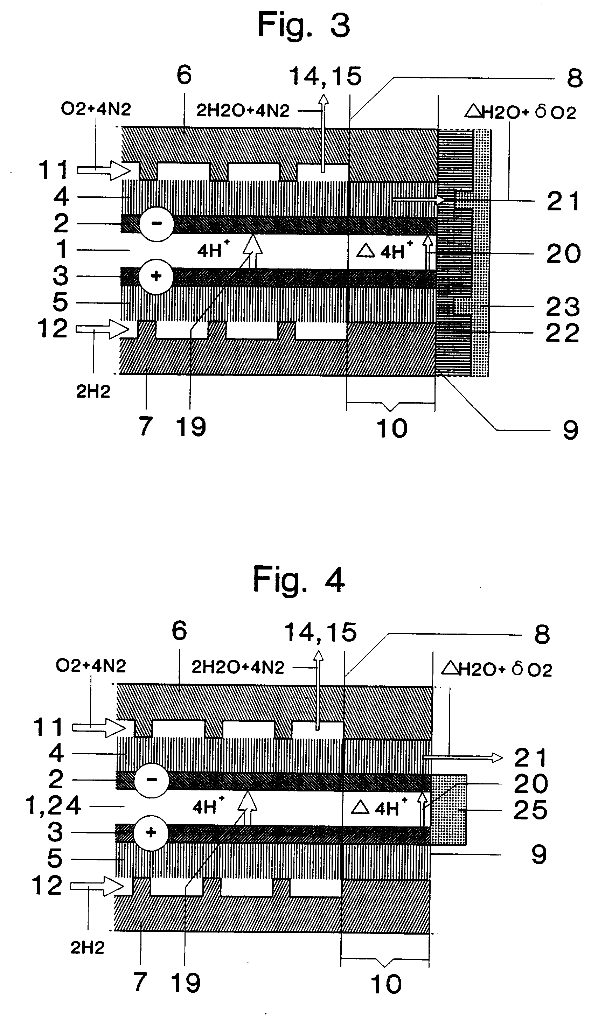

In Fig. 3 ist ein schematischer Schnitt (Aufriss) durch eine Brennstoffzelle mit perfluoriertem sulfoniertem Kationenaustauscher (Kunststoff-Polymer) als Feststoffelektrolyt dargestellt. Die Bezugszeichen 2 bis 12 entsprechen im wesnetlichen denjenigen der Figur 1. Im vorliegenden Fall besteht der auf ca. 80°C gehaltene Elektrolyt 1 aus einer in H₂O gequollenen Membran aus einem Kunststoff-Polymer auf der Basis eines dotierten Kationenaustauschers (z.B. "Nafion" von Du Pont). Dies ist in Figur 3 durch schräge Balken (Kunststoff-Gerüst) und durch horizontale unterbrochene Striche (H₂O-Füllung) angedeutet. Die Elektroden 2 und 3 bestehen in der Regel aus Platinmetallen oder mit Platinmetallen beschichteten korrosionsbeständigen Legierungen (z.B. Titanlegierungen) bzw. aus Kohlenstoff oder Verbundwerkstoffen auf Kohlenstoffbasis. Als Sauerstoffelektrode hat sich unter anderem eine Mischung von Iridium und Ruthenium bzw. deren Oxyden bewährt. Als Stromkollektoren 4; 5 werden Drahtgewebe oder gewellte Lamellen aus korrosionsbeständigen Materialien (z.B. Titan) verwendet. Die Bipolarplatte 6; 7 ist monolithisch oder besteht aus verschiedenen Schichten, wobei wieder Titan (Sauerstoffseite 6) bzw. Graphit (Brennstoffseite 7) Verwendung finden. Für die Bezugszeichen 8, 9, 10 gilt das unter Figuren 1 und 2 Gesagte. Dasselbe bezieht sich auf die Zufuhr 11 des gasförmigen Sauerstoffträgers ( O₂ + 4N₂) und die Zufuhr 12 des gasförmigen Brennstoffs(2H₂). Im vorliegenden Fall verlässt das Reaktionsprodukt 2H₂O sowie der Ballaststickstoff 4N₂ die Zelle auf der gleichen Seite der Bipolarplatte 6, nämlich auf der Sauerstoffseite (Bezugszeichen 14; 15). Der mit H₂O gequollene Feststoffelektrolyt 1 ist bei Temperaturen unter dem beim jeweiligen Druck sich ergebenden Verdampfungstemperaturen des Wassers ein Leiter für Wasserstoffionen. 19 stellt im vorliegenden Fall den auf der Plattenebene senkrecht stehenden elektrischen Feldstärkevektor dar, was gleichzeitig die Wanderungsrichtung der positiven Ladungsträger (Pfeil 4H⁺) im Elektrolyt im aktiven Bereich der Zelle bedeutet. 20 gibt den elektrischen Feldstärkevektor und die Wanderungsrichtung der positiven Ladungsträger (Pfeil Δ4H⁺) im Elektrolyt im Bereich der Randpartie 10 der Bipolarplatte dar. Ueber die Randpartie 10 der Bipolarplatte Sauerstoffseite 6 tritt durch den Stromkollektor 4 parallel zur Plattenebene der energielose Gesamt-Leckstoffstrom 21 (Pfeil Δ H₂O + δ O₂) aus. 22 ist der durch das Reaktionsprodukt (H₂O) des Leckstoffstroms bedingte Wassermantel. Ausser über den Leckstoffstrom tritt gelegentlich etwas Ueberschusswasser direkt aus dem Elektrolyten 1 aus. 23 stellt eine aus elektrischem Isoliermaterial bestehende wasserdichte Umhüllung des Wassermantels 22 dar. Diese ist mit nach innen gerichteten umlaufenden Rippen in Form eines Labyrinths versehen, das dazu dient, die Weglänge zwischen benachbarten Zellen zu vergrössern, den Wasserquerschnitt zu verkleinern und schädliche Nebenschluss-Stromkreise zu vermeiden.

Fig. 4 zeigt einen schematischen Schnitt (Aufriss) durch eine Brennstoffzelle mit H₃PO₄ als Flüssigelektrolyt. Die Bezugszeichen 2 bis 12 entsprechen im wesentlichen denjenigen der Figur 1. Im vorliegenden Fall besteht der vorzugsweise auf ca. 200°C gehaltene Elektrolyt 1 aus flüssiger H₃PO₄ (mit wenig % H₂O-Zusatz), was durch horizontale unterbrochene Striche in Figur 4 angedeutet ist. Der Elektrolyt 1 ist in einem Vlies 24 aus keramischem Stoff auf SiO₂-Basis als Gerüst gehalten und nimmt somit den Raum zwischen den Elektroden 2 und 3 als eine Art "flüssige Platte" ein. Der Flüssigelektrolyt 1 ist ein Leiter für Wasserstoffionen. 19 ist der auf der Plattenebene senkrecht stehende elektrische Feldstärkevektor, der gleichzeitig die Wanderungsrichtung der positiven Ladungsträger (Pfeil 4H⁺) im Elektrolyt im aktiven Bereich der Zelle darstellt. 20 stellt den elektrischen Feldstärkevektor und die Wanderungsrichtung der positiven Ladungsträger (Pfeil Δ4H⁺) im Elektrolyt im Bereich der Randpartie 10 der Bipolarplatte dar. Die Elektroden 2 und 3 bestehen aus gegenüber H₃PO₄ im Temperaturbereich von Raumtemperatur bis 200°C (Betriebstemperatur) korrosionsbeständigem Material. Das Reaktionsprodukt2H₂O sowie der Ballaststickstoff 4N₂ verlässt die Zelle auf der Bipolarplatte Sauerstoffseite 6, während der energielose Gesamt-Leckstoffstrom 21 (Pfeil Δ H₂O + δ O₂) über die Randpartie 10 der Bipolarplatte Sauerstoffseite 6 durch den Stromkollektor 4 seitlich austritt. 25 ist ein Rahmen aus Keramik zur Abdichtung des Flüssigelektrolyten 1.

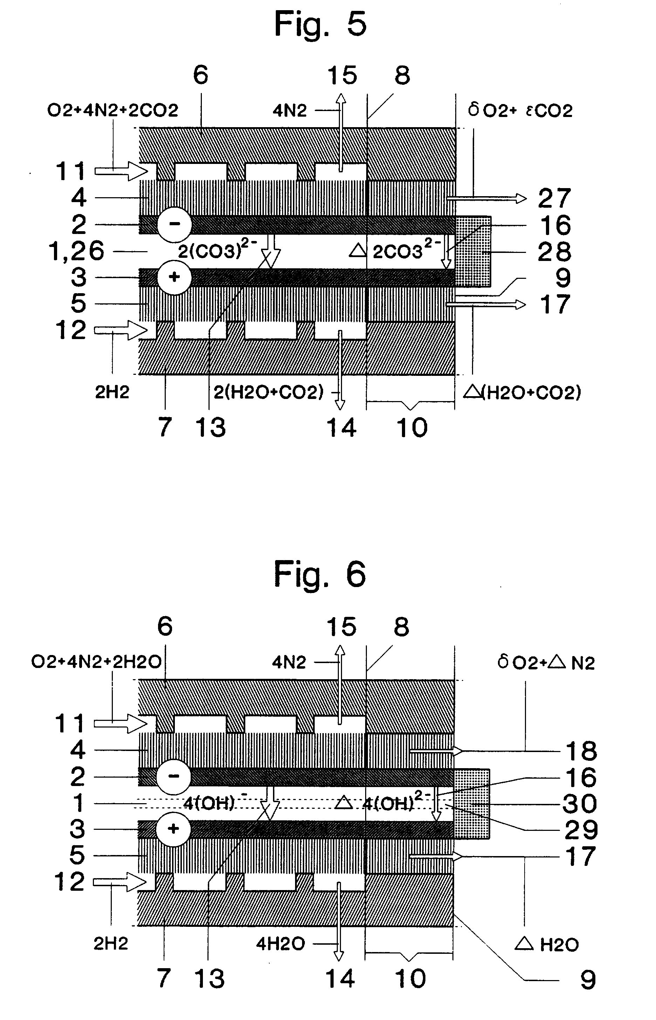

Fig. 5 stellt einen schematischen Schnitt (Aufriss) durch eine Brennstoffzelle mit einer eutektischen Schmelze von Li₂ CO₃/K₂CO₃ als Flüssigelektrolyt dar. Die Bezugszeichen 2 bis 12 entsprechen im wesentlichen denjenigen der Figur 1. Der im allgemeinen auf ca. 650°C gehaltene Elektrolyt 1 besteht im vorliegenden Fall aus einer schmelzflüssigen Mischung von Li₂CO₃ und K₂CO₃ eutektischer Zusammensetzung. Der Elektrolyt 1 ist in Figur 5 durch horizontale unterbrochene Striche angedeutet. Er ist in einem Vlies 26 (gestrichelte Schraffur) aus korrosionsbeständigem keramischem Stoff als Gerüst gehalten, im Raum zwischen den Elektroden 2 und 3 eine Art "flüssige Platte" bildend.

Der Flüssigelektrolyt 1 ist bei Betriebstemperatur ein Leiter für Karbonationen und somit mittelbar für Sauerstoffionen. 13 ist der auf der Plattenebene senkrecht stehende elektrische Feldstärkevektor, der gleichzeitig die Wanderungsrichtung der negativen Ladungsträger (Pfeil 2 CO₃²⁻) im Elektrolyt im aktiven Bereich der Zelle darstellt. 16 stellt den elektrischen Feldstärkevektor und die Wanderungsrichtung der negativen Ladungsträger (Pfeil Δ2CO₃²⁻) im Elektrolyt im Bereich der Randpartie 10 der Bipolarplatte dar. Die Elektroden 2 und 3 bestehen selbstverständlich aus gegenüber Li₂CO₃/K₂CO₃-Schmelze korrosionsbeständigen Werkstoffen. Die Sauerstoffelektrode 2 muss ausserdem gegenüber den Sauerstoffträgern (O₂ und CO₂) oxydationsbeständig sein. Die Abfuhr 14 der Reaktionsprodukte2(H₂O + CO₂) im aktiven Kernbereich der Zelle erfolgt über die Bipolarplatte Brennstoffseite 7, während die Abfuhr 15 des Ballaststickstoffs (4N₂) über die Bipolarplatte Sauerstoffseite 6 erfolgt. Das auf der Brennstoffseite abgezogene CO₂ wird nach Befreiung von H₂O der Zelle auf der Sauerstoffseite wieder zugeführt. Damit ist der CO₂-Kreislauf geschlossen. Auf der Brennstoffseite tritt der energielose Teil-Leckstoffstrom 17 [Pfeil Δ(H₂O + CO₂)] durch den Stromkollektor 5 parallel zur Plattenebene über die Randpartie 10 der Bipolarplatte aus. Auf der Sauerstoffseite verlässt der energielose Teil-Leckstoffstrom 27 (Pfeil δO₂ + εCO₂) die Zelle durch den Stromkollektor 4 parallel zur Plattenebene über die Randpartie 10 der Bipolarplatte. Dieser Teil-Leckstoffstrom 27 ist bedingt durch Ueberschüsse an O₂ (Luft) und CO₂ je nach Betriebsart der Zelle. 28 ist ein Rahmen aus Keramik zur Abdichtung des Flüssigelektrolyten 1.

In Fig. 6 ist ein schematischer Schnitt (Aufriss) durch eine Brennstoffzelle mit KOH als Flüssigelektrolyt dargestellt. Die Bezugszeichen 2 bis 12 entsprechen im wesentlichen denjenigen der Figur 1. Im vorliegenden Fall besteht der vorzugsweise auf ca. 80° gehaltene Elektrolyt 1 aus einer 15 bis 30%-igen wässrigen Lösung von KOH. Zur Vermeidung der direkten ungeordneten Reaktion von Wasserstoff und Sauerstoff ist im Elektrolyt 1 ein Diaphragma 29 aus einem Vlies aus Asbest oder einem keramischen Stoff angeordnet. Der Flüssigelektrolyt 1 ist ein Leiter für OH-Ionen und somit mittelbar für Sauerstoffionen. 13 ist der auf der Plattenebene senkrecht stehende elektrische Feldstärkevektor, der gleichzeitig die Wanderungsrichtung der negativen Ladungsträger (Pfeil 40H⁻) im Elektrolyt im aktiven Bereich der Zelle darstellt. 16 stellt den elektrischen Feldstärkevektor und die Wanderungsrichtung der negativen Ladungsträger (Pfeil Δ 40H⁻) im Elektrolyt im Bereich der Randpartie 10 der Bipolarplatte dar. Die Elektroden 2 und 3 bestehen aus gegenüber KOH-Lösung korrosionsbeständigem Material. Die Sauerstoffelektrode 2 muss ausserdem gegenüber den Sauerstoffträgern (O₂ und H₂O) oxydationsbeständig sein. Die Abfuhr 14 des Reaktionsprodukts 4H₂O im aktiven Kernbereich der Zelle erfolgt über die Bipolarplatte Brennstoffseite 7, während die Abfuhr 15 des Ballaststickstoffs (4N₂) über die Bipolarplatte Sauerstoffseite 6 erfolgt. Die Hälfte des auf der Brennstoffseite abgezogenen Wassers wird der Zelle auf der Sauerstoffseite wieder zugeführt. Auf der Brennstoffseite tritt der energielose Teil-Leckstoffstrom 17 (Pfeil Δ H₂O) durch den Stromkollektor 5 parallel zur Plattenebene über die Randpartie 10 der Bipolarplatte aus. Auf der Sauerstoffseite verlässt der energielose Teil-Leckstoffstrom 18 (Pfeil δO₂) die Zelle durch den Stromkollektor 4 parallel zur Plattenebene über die Randpartie 10 der Bipolarplatte. 30 ist ein Rahmen aus laugenbeständigem Kunststoff zur Abdichtung des Flüssigelektrolyten 1.

### Ausführungsbeispiel 1:

### Siehe Fig. 2!

Für die Untersuchung des Betriebsverhaltens stand ein aus 20 einzelnen Hochtemperatur-Brennstoffzellen bestehender plattenförmiger Stapel zur Verfügung. Eine einzelne Zelle bestand aus Feststoffelektrolyt 1, Sauerstoffelektrode 2, Brennstoffelektrode 3, Stromkollektoren 4 und 5 und zwei Hälften einer Bipolarplatte 6; 7. Der Feststoffelektrolyt 1 bestand aus stabilisiertem, dotiertem ZrO₂, war rechteckig, plattenförmig, eben und hatte eine Breite von 110 mm, eine Länge von 145 mm und eine Dicke von 0,25 mm. Der Feststoffelektrolyt 1 war auf einer Seite auf seiner ganzen Fläche mit der porösen Sauerstoffelektrode 2 aus SrO-dotiertem La/Mn-Perowskit von 0,08 mm Dicke beschichtet. Auf der anderen Seite trug der Feststoffelektrolyt 1 als poröse Brennstoffelektrode 3 eine Beschichtung aus Ni/ZrO₂-Cermet von 0,04 mm Dicke. Der Stromkollektor 4 auf der Sauerstoffseite bestand aus einem elastischen feinmaschigen Metallgewebe aus einer zunderbeständigen warmfesten Nickelbasislegierung mit ca. 30 % Cr und ca. 9,5 % Fe, während der Stromkollektor 5 auf der Brennstoffseite aus einem elastischen Gewebe aus dispersionsgehärtetem Nickel bestand. Die mit Kanälen für die gasförmigen Medien ausgestattete Bipolarplatte 6; 7 bestand aus einer zunderbeständigen Eisenbasislegierung mit ca. 20 % Cr, ca. 5 % Al und ca. 1 % Si. Die Brennstoffseite 7 der Bipolarplatte war mit einer ca. 0,05 mm dicken Nickelschicht belegt. Zwischen der Grenzfläche 8 der Reaktanden-Zufuhr und der Kante 9 der Bipolarplatte befand sich die parallel zur Plattenebene 7,5mm Breite aufweisende Randpartie 10. Die Zufuhr 11 des gasförmigen Sauerstoffträgers zum Stapel der Zellen bestand aus vorgewärmter Luft (O₂ + 4N₂) und die Zufuhr 12 des gasförmigen Brennstoffs aus ebenfalls vorgewärmtem Wasserstoff (2H₂).

Die Brennstoffzellen wurden mit einer Nennstromdichte von 0,2 A/cm² , bezogen auf einseitige Elektrodenoberfläche im aktiven Kernbereich der Zellen (vergl. elektrischer Feldstärkevektor 13) betrieben. Der Luftstrom (Zufuhr 11) wurde derart eingestellt, dass eine mittlere konstante Betriebstemperatur der Zellen von ca. 850°C gehalten wurde. Die Zellenspannung betrug ca. 0,7 V, diejenige des gesamten Stapels (20 Zellen) ca. 14 V. Betreffend die den Bezugszeichen 14 bis 18 entsprechenden Grössen wird auf die Beschreibung der Fig. 2 verwiesen. Der energielose Teil-Leckstoffstrom 18 ( δ O₂) betrug im vorliegenden Fall ca.15 % der Zufuhr 11 des Sauerstoffträgers, während der energielose Teil-Leckstoffstrom 17 ( Δ H₂O) ca. 10 % des im aktiven Kernbereich der Zelle verbrauchten Brennstoffs (H₂) entsprach und keinerlei freien Wasserstoff mehr enthielt. Das bedeutet, dass die elektrochemische Reaktion praktisch nach Durchlaufen von ca.2/3 der Breite der Randpartie 10 der Bipolarplatte zum Abschluss kam.

### Ausführungsbeispiel 2:

### Siehe Fig. 3!

Es wurde ein aus 25 einzelnen Brennstoffzellen mit Ionenaustauscher-Membran bestehender plattenförmiger Stapel untersucht. Eine einzelne Zelle bestand aus Feststoffelektrolyt 1, Sauerstoffelektrode 2, Brennstoffelektrode 3, Stromkollektoren 4 und 5 und zwei Hälften einer Bipolarplatte 6; 7. Der Feststoffelektrolyt 1 bestand aus einer Kationenaustauschermembran in Form einer Folie vom Typ perfluorierter Polymer mit Sulfosäuren (Handelsname Nafion von Du Pont), war von quadratischer Form von 230 mm Seitenlänge und einer Dicke von 0,35 mm. Auf einer Seite war der Feststoffelektrolyt 1 auf seiner ganzen Fläche mit einem als poröse Sauerstoffelektrode 2 dienenden Elektrokatalysator aus einer IrO₂/RuO₂-Mischung von 2 µm Dicke beschichtet. Auf der anderen Seite war der Feststoffelektrolyt 1 auf seiner ganzen Fläche mit einer als Brennstoffelektrode 3 dienenden gasdurchlässigen Beschichtung auf der Basis von feinverteiltem Kohlenpulver von total 15 µm Dicke versehen. Der Stromkollektor 4 auf der Sauerstoffseite bestand aus einem Geflecht/Gewebe aus Titan, das an den Berührungsflächen zu den benachbarten Bauelementen eine Platinbeschichtung aufwies. Der Stromkollektor 5 auf der Brennstoffseite war aus einem Vlies aus Nickel aufgebaut, das zur Verstärkung der mechanischen Stabilität mit einem federnden Drahtgeflecht aus Nickel armiert war. Die mit kreuzweise angeordneten Kanälen für die gasförmigen und flüssigen Medien versehene Bipolarplatte 6;7 bestand auf der Sauerstoffseite 6 aus einer aus Titanpulver dicht gesinterten Platte, die an den Berührungsstellen zum Stromkollektor 4 zwecks Depassivierung eine Platinbeschichtung trug, während die Brennstoffseite 7 aus dicht gesintertem Graphit bestand. Die beiden Hälften der Bipolarplatte 6; 7 waren durch Sintern zu einem monolithischen Körper zusammengefügt. Die Randpartie 10 zwischen der Grenzfläche 8 der Reaktanden-Zufuhr und der Kante 9 der Bipolarplatte hatte eine Breite von 12,5 mm. Die Zufuhr 11 des gasförmigen Sauerstoffträgers zur Zelle bestand aus Luft (O₂ +4N₂), die Zufuhr 12 des Brennstoffs aus Wasserstoff(2H₂). Die wasserdichte Umhüllung 23 zur Abdichtung des Wassermantels 22 bestand aus isolierendem, korrosionsbeständigem Kunststoff von 3 mm Wandstärke und wies umlaufende, nach innen vorkragende Rippen von 2 mm Breite und 1,5 mm Dicke auf.

Die Brennstoffzellen wurden mit einer Nennstromdichte von 1A/cm², bezogen auf einseitige Elektrodenoberfläche im aktiven Kernbereich der Zellen (Feldstärkevektor 19) betrieben. Die mittlere konstante Betriebstemperatur der Zellen war ca. 80°C. Die Zellenspannung betrug ca. 0,75V, die Spannung des gesamten Stapels (25 Zellen) ca. 18,75V. Betreffend Bezugszeichen 14; 15, 19, 20 siehe Beschreibung Fig. 3. Der energielose Gesamt-Leckstoffstrom 21 ( Δ H₂O + δO₂) betrug hier ca. 12 % der Zufuhr 11 des Sauerstoffträgers bzw. ca. 7 % des im aktiven Kernbereich der Zelle verbrauchten Brennstoffs (H₂). Der Leckstoffstrom enthielt keinerlei freien Wasserstoff, was bewies, dass die elektrochemischen Reaktionen innerhalb der Randpartie zum Abschluss kamen.

### Ausführungsbeispiel 3:

### Siehe Fig. 4!

Eine aus 50 einzelnen Brennstoffzellen bestehende plattenförmige Batterie des Typs mit H₃PO₄ als Elektrolyt wurde auf ihr Betriebsverhalten hin untersucht. Eine einzelne Zelle bestand aus Flüssigelektrolyt 1, Sauerstoffelektrode 2, Brennstoffelektrode 3 und Stromkollektoren 4 und 5 sowie aus zwei Hälften der Bipolarplatte 6; 7. Der Flüssigelektrolyt 1 bestand aus H₃PO₄, dem ca. 3 % H₂O beigemischt war. Er war in einem Vlies 24 aus keramischem Stoff auf SiO₂-Basis als Gerüst festgehalten, das eine quadratische Form von 800 mm Seitenlänge und eine Dicke von 1,2 mm aufwies. Sowohl die Sauerstoffelektrode 2 wie die Brennstoffelektrode 3 bestand aus einer 0,15 mm dicken porösen, gasdurchlässigen Folie aus Kohlenstoff, in dem Platinpartikel dispergiert waren. Die Sauerstoffelektrode 2 war ausserdem auf der Stromkollektorseite zur besseren Kontaktgabe platiniert. Der Stromkollektor 4 auf der Sauerstoffseite bestand aus federnden, an den Berührungspunkten zu benachbarten Bauelementen platinierten gewellten Lamellen aus einer warmfesten Eisenbasislegierung mit hohem Cr- und Al-Gehalt, während der Stromkollektor 5 auf der Brennstoffseite aus einem federharten elastischen Drahtgeflecht aus Nickel bestand. Die Bipolarplatte 6; 7 wies kreuzweise angeordnete Kanäle zur Führung der gasförmigen Medien auf und bestand auf der Sauerstoffseite 6 aus einer aus Titan- und Kohlepulver dicht gesinterten Platte, während die Brennstoffseite 7 aus gesintertem Kohlepulver allein bestand. Beide Hälften der Bipolarplatte 6; 7 bildeten einen einzigen, monolithischen kompakten Sinterkörper. Die sich zwischen der Grenzfläche 8 der Reaktanden-Zufuhr und der Kante 9 der Bipolarplatte befindliche Randpartie 10 wies parallel zur Plattenebene eine Breite von 25 mm auf. Die Zufuhr 11 des Sauerstoffträgers zum Zellenstapel erfolgte in Form von Luft (O₂ + 4N₂) und die Zufuhr 12 des Brennstoffs in Form von Wasserstoff(2H₂). Der Rahmen 25 aus Oxyd-Keramik zur Abdichtung des Flüssigelektrolyten 1 war mit dem Vlies 24 durch Sintern fest verbunden und hatte einen rechteckigen Querschnitt von 10 mm Breite und 1,5 mm Höhe (In Figur 4 verzerrt gezeichnet).

Der Stapel der Brennstoffzellen wurde mit einer Nennstromdichte von 0,5 A/cm² im aktiven Kernbereich der Zellen (Feldstärkevektor 19) betrieben. Die mittlere Betriebstemperatur der Zellen betrug 200°C. Die Zellenspannung war ca. 0,65 V, diejenige des ganzen Stapels (50 Zellen) 32,5 V. Die Bezugszeichen 14; 15 sowie 20 und 21 gehen aus der Beschreibung der Fig. 4 hervor. Der energielose Gesamt-Leckstoffstrom 21 (Δ H₂O + δ O₂) betrug im vorliegenden Fall ca.10 % der Zufuhr 11 des Sauerstoffträgers bzw. ca. 5 % des im aktiven Kernbereich der Zelle verbrauchten Brennstoffs (H₂). Es konnte keinerlei freier Wasserstoff mehr im Leckstoffstrom festgestellt werden. Die elektrochemische Reaktion kam noch deutlich vor Erreichen des äusseren Endes der Randzone 10 der Bipolarplatte zum Stillstand.

### Ausführungsbeispiel 4:

### Siehe Fig. 5!

Das Betriebsverhalten wurde an einem plattenförmigen Stapel von 10 einzelnen Brennstoffzellen des Typs mit Karbonatschmelze als Elektrolyt untersucht. Eine einzelne Zelle bestand aus Flüssigelektrolyt 1 , Sauerstoffelektrode 2, Brennstoffelektrode 3, Stromkollektoren 4 und 5 und zwei Hälften einer Bipolarplatte 6;7. Der Flüssigelektrolyt 1 bestand aus einer eutektischen Schmelze von Li₂CO₃ und K₂CO₃ und war in einem Vlies 26 aus einem korrosionsbeständigen keramischen Stoff als Gerüst festgehalten. Es war von quadratischer Form mit einer Seitenlänge von 400 mm und einer Dicke von 0,8 mm. Die Sauerstoffelektrode 2 bestand aus einer porösen, gasdurchlässigen Nickelschicht von 0,2mm Dicke, die auf der Stromkollektorseite zwecks besserer Kontaktgabe platiniert war. Die Brennstoffelektrode 3 bestand aus einem fein perforierten, gasdurchlässigen Nickelblech von 0,4 mm Dicke. Der Stromkollektor 4 auf der Sauerstoffseite bestand aus federharten, an den Berührungsstellen zur benachbarten Elektrode und zur benachbarten Bipolarplatte platinierten gewellten Lamellen aus einer hochwarmfesten Nickelbasislegierung mit Alund Ti-Zusatz und einem Cr-Gehalt von mindestens 20 %, während der Stromkollektor 5 auf der Brennstoffseite aus einem federharten elastischen Drahtgeflecht aus einer dispersionsgehärteten Nickellegierung bestand. Die Bipolarplatte 6; 7 war mit Kanälen zur Führung der gasförmigen Medien ausgestattet und bestand auf der Sauerstoffseite 6 aus einer aus Titan- und Kohlepulver dicht gesinterten Platte, während die Brennstoffseite 7 aus gesintertem Kohlepulver bestand. Beide Hälften der Bipolarplatte 6;7 bildeten einen kompakten, monolithischen Sinterkörper. Die zwischen Grenzfläche 8 und Kante 9 vorhandene Randpartie 10 der Bipolarplatte wies eine Breite von 15 mm auf. Die Zufuhr 11 des gasförmigen Sauerstoffträgers bestand aus vorgewärmter Luft und rückgeführtem Kohlendioxyd (O₂ + 4N₂ +2CO₂) und die Zufuhr 12 des gasförmigen Brennstoffs aus Wasserstoff(2H₂). Der Rahmen 28 aus korrosionsbeständiger Hochtemperatur-Keramik zur Abdichtung des Flüssigelektrolyten 1 war mit dem Vlies 26 durch Sintern fest verbunden und hatte einen rechteckigen Querschnitt von 10 mm Breite und 1,4 mm Höhe.

Die Brennstoffzellen wurden mit einer Nennstromdichte von 0,8A/cm² im aktiven Kernbereich der Zellen (Feldstärkevektor 13) betrieben. Die mittlere Betriebstemperatur der Zellen wurde mittels Steuerung der Stoffströme auf ca. 650°C, also deutlich oberhalb der eutektischen Temperatur, gehalten. Die Zellenspannung betrug ca. 0,6 V, diejenige des ganzen Stapels (10 Zellen) 6 V. Die Bedeutung der Bezugszeichen 14, 15 und 16 geht aus der Figurenbeschreibung (Fig. 5) hervor. Der energielose Teil-Leckstoffstrom 17 [Δ (H₂O + CO₂)] entsprach ca. 8 % des im aktiven Kernbereich der Zelle verbrauchten Brennstoffs (H₂) und enthielt keinerlei freien Wasserstoff. Die elektrochemische Reaktion war somit vor Erreichen des äusseren Endes der Randzone 10 der Bipolarplatte abgeschlossen. Der energielose Teil-Leckstoffstrom 27 ( δO₂ + εCO₂) betrug im vorliegenden Fall ca.20 % der Zufuhr 11 des Sauerstoffträgers für die Luft und ca. 8 % für das Kohlendioxyd.

### Ausführungsbeispiel 5:

### Siehe Fig. 6!

Es wurde das Betriebsverhalten einer aus 40 einzelnen plattenförmigen Brennstoffzellen bestehenden Batterie des Typs mit KOH als Elektrolyt auf ihr Betriebsverhalten hin untersucht. Die einzelne Zelle bestand aus Flüssigelektrolyt 1, Sauerstoffelektrode 2, Brennstoffelektrode 3, Stromkollektoren 4 und 5, Diaphragma 29 und zwei Hälften der Bipolarplatte 6; 7. Der Flüssigelektrolyt 1 bestand aus einer 25%-igen wässrigen Lösung von KOH. Der zwischen zwei benachbarten Elektroden 2;3 eingeschlossene Elektrolyt belegte ein Quadrat von 600 mm Seitenlänge und hatte eine Dicke (Elektrodenabstand) von 15 mm. Die Sauerstoffelektrode 2 bestand aus einem porösen, gasdurchlässigen Vlies/Filz aus Nickel von 0,5 mm Dicke, während die Brennstoffelektrode 3 aus einem ebensolchen Vlies aus Stahl gleicher Abmessungen gefertigt war. Der Stromkollektor 4 auf der Sauerstoffseite bestand aus einem federharten elastischen feinmaschigen Drahtgeflecht aus Nickel, während der Stromkollektor 5 auf der Brennstoffseite aus einem ebensolchen aus Stahl bestand. Die Bipolarplatte 6; 7 wies parallel angeordnete Kanäle zur Führung der gasförmigen und flüssigen Medien auf und bestand auf der Brennstoffseite 7 aus Stahl, während die Sauerstoffseite 6 mit Nickel plattiert war. Beide Hälften der Bipolarplatte 6; 7 bildeten einen einzigen, monolithischen kompakten Metallkörper. Die sich zwischen der Grenzfläche 8 der Reaktanden-Zufuhr und der Kante 9 der Bipolarplatte befindliche Randpartie 10 wies parallel zur Plattenebene eine Breite von 30 mm auf. Die Zufuhr 11 des Sauerstoffträgers bestand aus Luft und gekühltem, teilweise rückgeführten Wasser (O₂+4N₂+2H₂O) und die Zufuhr 12 des gasförmigen Brennstoffs in Form von Wasserstoff (2H₂). Das Diaphragma 29 bestand aus einem Vlies aus keramischem Stoff, an dessen Kontur sich ein vollständig abschliessender Rahmen 30 aus laugenbeständigem Kunststoff zur Abdichtung des Flüssigelektrolyten 1 mit rechteckigem Querschnitt von 12 mm Breite und 17 mm Höhe anschloss.

Der Stapel der Brennstoffzellen wurde mit einer Nennstromdichte von 0,6 A/cm² im aktiven Kernbereich der Zellen (Feldstärkevektor 13) betrieben. Die mittlere Betriebstemperatur der Zellen betrug 80°C. Die Zellenspannung war ca. 0,55 V, diejenige des ganzen Stapels (40 Zellen) 22 V. Die Bedeutung der Bezugszeichen 14, 15 und 16 geht aus der Figurenbeschreibung (Fig. 6) hervor. Der energielose Teil-Leckstoffstrom 17 (Δ H₂O) entsprach ca. 12 % des im aktiven Kernbereich der Zelle verbrauchten Brennstoffs (H₂). Er enthielt keinerlei freien Wasserstoff mehr. Der energielose Teil-Leckstoffstrom 18 (δ O₂) betrug im vorliegenden Fall ca. 25 % der Zufuhr 11 des Sauerstoffträgers für die Luft und ca. 10 % für das Wasser.

Die Erfindung ist nicht auf die Ausführungsbeispiele beschränkt, desgleichen keineswegs auf ebene Dichtungsbereiche.

Das Verfahren zur Verringerung der an den Stosstellen und Randpartien im Dichtungsbereich der Elektroden 2; 3 und des Elektrolyten 1 einer elektrochemischen Zelle auftretenden, durch Leckstoffströme und Leckenergieströme auftretenden Stoff- und Exergieverluste wird durchgeführt, indem gezielt unter Verzicht des Anstrebens möglichst vollständiger Dichtung und möglichst geringer Leckströme in den Randpartien der Kammern benachbarter Sauerstoffelektrode 2 und Brennstoffelektrode 3 in den besagten Randpartien 10 die aus den Elektrodenkammern stammenden, senkrecht zur Richtung der elektrischen Feldstärke strömenden Reaktanden Sauerstoffträger und Brennstoff zur Fortführung und möglichst vollständigen Beendigung Ihrer unter dem Einfluss der elektrischen Feldstärke geordnet ablaufenden Reaktion gezwungen werden, dergestalt, dass sämtliche aus der Leckstelle nach aussen gelangenden Stoffströme zu keiner noch verbleibenden unerwünschten ungeordneten Reaktion befähigt sind, kein eigenes chemisches Potential mehr besitzen und gesamthaft keinen, einen Verlust repräsentierenden Exergieinhalt mehr aufweisen, und dass die innerhalb der Leckstelle zu erfolgende Energieumsetzung im Sinne der Erhöhung des elektrochemischen Gesamtwirkungsgrades erfolgt.

Die Vorrichtung zur Verringerung der an den Stosstellen und Randpartien im Dichtungsbereich der Elektroden 2; 3 und des Elektrolyten 1 einer elektrochemischen Zelle oder eines Stapels oder einer anderen Anordnung bestehend aus einer Vielzahl elektrochemischer Zellen auftretenden, durch Leckstoffströme und Leckenergieströme auftretenden Stoff- und Exergieverluste, ist derart konzipiert, dass im geometrischen Aufbau der elektrochemischen Zelle konstruktiv dafür gesorgt ist, dass Elektrolyt 1, Sauerstoffelektrode 2, Brennstoffelektrode 3 sowie die die Stromzuführung und Stromabführung zu den Elektroden 2; 3 bewerkstelligenden Stromkollektoren 4; 5 genau bis zur Kante 9 der Randpartie 10 der Bipolarplatten 6; 7 oder der entsprechenden Endplatten reichen und mit letzteren bündig abschliessen, und dass die durch die Grenzfläche 8 der Zufuhr oder Abfuhr der gasförmigen Reaktanden oder Reaktionsprodukte und der äussersten Kontur der Kante 9 der Randpartie 10 der Bipolarplatten 6; 7 bestimmte, senkrecht zur elektrischen Feldstärke gemessene Breite der Randpartie 10 der Bipolarplatten 6; 7 derart bestimmt ist,dass die auf diesem Leckweg in der Randpartie 10 sich abspielenden elektrochemischen Reaktionen beim Erreichen der Kante 9 vollständig zum Abschluss gelangt sind.

In bevorzugter Weise ist die als elektrochemische Zelle (n) ausgebildete Vorrichtung eine aus plattenförmigen Bauelementen bestehende Hochtemperatur-Brennstoffzelle mit dotiertem und stabilisiertem ZrO₂ als Feststoffelektrolyt oder ein Stapel einer Vielzahl gleichartiger Brennstoffzellen mit Kammern für die gasförmigen Medien bildenden separierenden Bipolarplatten 6; 7, wobei der zugeführte Sauerstoffträger auf der Seite der Sauerstoffelektrode 2 Luft, technisch reiner Sauerstoff oder an Sauerstoff angereicherte Luft und der zugeführte gasförmige Brennstoff auf der Seite der Brennstoffelektrode 3 H₂, CO, CH₄, CₙHₘ oder eine Mischung aus mindestens zweien der vorgenannten Stoffe ist und ferner der Abstand zweier eine Brennstoffzelle begrenzenden Bipolarplatten 6; 7 senkrecht zur Plattenebene höchstens 5 mm und die durch die Grenzfläche 8 und die äussere Kontur der Kante bestimmte Breite der Randpartie 10 der Bipolarplatten 6; 7 mindestens 5 mm beträgt.

In einer weiteren vorteilhaften Ausführung der elektro-chemischen Zelle (n) liegt die Vorrichtung als eine aus plattenförmigen Bauelementen bestehende Brennstoffzelle mit perfluoriertem sulfoniertem organischen Kationenaustauscher-Polymer in Membranform als Feststoffelektrolyt oder als ein Stapel einer Vielzahl gleichartiger Brennstoffzellen mit Kammern für die gasförmigen Medien und Kanälen für den Wasserabfluss bildenden separierenden Bipolarplatten 6; 7 vor, wobei der zugeführte Sauerstoffträger auf der Seite der Sauerstoffelektrode 2 Luft, technisch reiner Sauerstoff oder an Sauerstoff angereicherte Luft und der zugeführte gasförmige Brennstoff auf der Seite der Brennstoffelektrode 3 H₂ ist und zwecks Zusammenhaltens des aus dem Reaktionsprodukt gebildeten Wassermantels 22 in unmittelbarer Nähe der äusseren Begrenzung der Brennstoffzelle(n) eine wasserdichte Umhüllung 23 mit nach innen gerichteten umlaufenden Rippen in Form eines Labyrinths, deren Ebenen parallel zur Plattenebene stehen, angeordnet ist und ferner der Abstand zweier eine Brennstoffzelle begrenzenden Bipolarplatten 6; 7 senkrecht zur Plattenebene höchstens 5 mm und die durch die Grenzfläche 8 und die äussere Kontur der Kante bestimmte Breite der Randpartie 10 der Bipolarplatten 6; 7 mindestens 5 mm beträgt.

In einer anderen Ausbildung der elektrochemischen Zelle(n) ist die Vorrichtung eine aus plattenförmigen Bauelementen bestehende Brennstoffzelle mit in einem Vlies 24 aus einem keramischen Stoff auf SiO₂-Basis als Gerüst festgehaltenen Flüssigelektrolyten in Form von H₃PO₄ oder ein Stapel einer Vielzahl gleichartiger Brennstoffzellen mit Kammern für die gasförmigen Medien bildenden separierenden Bipolarplatten 6; 7, wobei der zugeführte Sauerstoffträger auf der Seite der Sauerstoffelektrode 2 Luft, technisch reiner Sauerstoff oder an Sauerstoff angereicherte Luft und der zugeführte gasförmige Brennstoff auf der Seite der Brennstoffelektrode 3 H₂ ist, und in unmittelbarer Nähe der Begrenzung der Brennstoffzelle(n) für jede Zelle ein am Rand des Elektrolyten 1 bündig und dicht anschliessender Rahmen zur Abdichtung und Zurückhaltung des letzteren, bestehend aus keramischem Material auf SiO₂-Basis angeordnet ist und ferner der Abstand zweier eine Brennstoffzelle begrenzenden Bipolarplatten 6; 7 senkrecht zur Plattenebene höchstens 8 mm und die durch die Grenzfläche 8 und die äussere Kontur der Kante bestimmte Breite der Randpartie 10 der Bipolarplatten 6; 7 mindestens 10 mm beträgt.

Die als elektrochemische Zelle(n) vorliegende Vorrichtung ist in einer anderen Ausführung eine aus plattenförmigen Bauelementen bestehende Brennstoffzelle mit in einem Vlies 26 aus einem keramischen Stoff als Gerüst festgehaltenem Flüssigelektrolyten in Form einer eutektischen Schmelze von Li₂CO₃ und K₂CO₃ oder ein Stapel einer Vielzahl gleichartiger Brennstoffzellen mit Kammern für die gasförmigen Medien bildenden separierenden Bipolarplatten 6; 7, wobei der zugeführte Sauerstoffträger auf der Seite der Sauerstoffelektrode 2 Luft, technisch reiner Sauerstoff oder an Sauerstoff angereicherte Luft und der zugeführte gasförmige Brennstoff auf der Seite der Brennstoffelektrode 3 H₂ oder CO ist und in unmittelbarer Nähe der Begrenzung der Brennstoffzelle(n) für jede Zelle ein am Rand des Elektrolyten 1 bündig und dicht anschliessender Rahmen zur Abdichtung und Zurückhaltung des letzteren, bestehend aus keramischem Material auf Al₂O₃-Basis angeordnet ist und ferner der Abstand zweier eine Brennstoffzelle begrenzenden Bipolarplatten 6; 7 senkrecht zur Plattenebene höchstens 7 mm und die durch die Grenzfläche 8 und die äussere Kontur der Kante bestimmte Breite der Randpartie 10 der Bipolarplatten 6; 7 mindestens 10 mm beträgt.

In einer weiteren Ausführung ist die als elektrochemische Zellen ausgebildete Vorrichtung eine aus plattenförmigen Bauelementen bestehende Brennstoffzelle mit durch ein trennendes Diaphragma 29 aus Asbest oder aus einem keramischen Stoff in zwei Räumen festgehaltenen Flüssigelektrolyten in Form einer wässrigen KOH-Lösung oder ein Stapel einer Vielzahl gleichartiger Brennstoffzellen mit Kammern für die gasförmigen Medien bildenden separierenden Bipolarplatten 6; 7, wobei der zugeführte Sauerstoffträger auf der Seite der Sauerstoffelektrode 2 Luft, technisch reiner Sauerstoff oder an Sauerstoff angereicherte Luft und der zugeführte gasförmige Brennstoff auf der Seite der Brennstoffelektrode 3 H₂ ist, und in unmittelbarer Nähe der Begrenzung der Brennstoffzelle(n) für jede Zelle ein am Rand des Elektrolyten 1 bündig und dicht anschliessender Rahmen zur Abdichtung und Zurückhaltung des letzteren, bestehend aus laugenbeständigem Kunststoff angeordnet ist und ferner der Abstand zweier eine Brennstoffzelle begrenzenden Bipolarplatten 6;7 senkrecht zur Plattenebene höchstens 10 mm und die durch die Grenzfläche 8 und die äussere Kontur der Kante bestimmte Breite der Randpartie 10 der Bipolarplatten 6;7 mindestens 15 mm beträgt.

Das Verfahren zur Verringerung der Verluste in elektrolytischen Zellen wird durchgeführt, indem in einer elektrochemischen, der Elektrolyse dienenden Zelle die vom aktiven Elektrolyseteil durch einen allseitigen isolierenden Spalt elektrisch vollständig getrennte, einen geschlossenen Rahmen bildende Randpartie 10 als Brennstoffzelle betrieben wird, dergestalt, dass die vom aktiven Elektrolyseteil nach aussen abgehenden, aus den Reaktanden Sauerstoffträger und Brennstoff bestehenden Leckstoffströme abgefangen und unter dem Einfluss der elektrischen Feldstärke zum vollständigen Ablauf ihrer geordneten Reaktion gezwungen werden, und dass die dadurch zurückgewonnene elektrische Energie zur Unterstützung der Elektrolyse und zur Erhöhung ihrer Stromausbeute und ihres Gesamtwirkungsgrades herangezogen wird.

### Vorteile der Erfindung

- Universelle Anwendbarkeit auf praktisch alle Typen und Konstruktionen von Brennstoffzellen.
- Markante Vereinfachung der Zellenkonstruktionen im Bereich der Dichtungen.
- Elegante Lösung der schwierigen Dichtungsprobleme bzw. Umgehung der letzteren durch vorteilhafte konstruktive Gestaltung der Randpartien und optimale Betriebsführung.
- Wegfall teurer temperatur- und/oder korrosionsbeständiger, der physikalischen, mechanischen und chemischen Alterung unterworfener Dichtungsmaterialien.
- Vereinfachung der Führung strömender Medien im Randbereich der Zellen.
- Erhöhung der Zwischenüberholzeiten von Zellen und Zellenverbänden.
- Schwimmende Lagerung des Elektrolyten mit Möglichkeit der unterschiedlichen Längendehnung bei Temperaturänderungen.
- Funktionstrennung.
- Schnelle, problemlose Montage.
- Vollständige Energienutzung der Leckstoffströme.

## Patentansprüche

1. Verfahren zur Verringerung von Energieverlusten, die durch Undichtigkeiten der Randpartien elektro-chemischer Zellen durch Austreten von nicht der elektro-chemischen Reaktion unterworfenen Stoffströmen auftreten,
dadurch gekennzeichnet,
daß der Randbereich (10) der elektro-chemischen Zelle als eine nicht gedichtete, elektrisch leitende Zone ausgebildet ist von der unmittelbaren Zufuhr von Stoffströmen freigehalten wird und daß unter gezielter Inkaufnahme von Undichtigkeit Leckageströme der Reaktanden, nämlich der Sauerstoffträger und der Brennstoff, durch den Randbereich geführt werden, wobei die geometrische Abmessung des bzw. der Randbereiche (10) derart gewählt wird, daß die nach außen gelangenden Leckageströme (17,18;21;27) zu keiner noch verbleibenden, unerwünschten, ungeordneten Reaktion befähigt sind, kein eigenes chemisches Potential mehr besitzen und insgesamt keinen, einen Verlust repräsentierenden EnergieInhalt durch Fortführung und vollständige Beendigung der Reaktion im Randbereich (10) mehr aufweisen.

2. Verfahren nach Anspruch 1,
dadurch gekennzeichnet,
daß in einer elektro-chemischen, der Elektrolyse dienenden Zelle, die vom aktiven Elektrolyseteil durch einen allseitigen, isolierenden Spalt elektrisch vollständig getrennte, einen geschlossenen Rahmen bildende Randpartie (10) als Brennstoffzelle betrieben wird, dergestalt, daß die vom aktiven Elektrolyseteil nach außen abgehenden, aus den Reaktanden Sauerstoffträger und Brennstoff bestehenden Leckageströme unter dem Einfluß der elektrischen Feldstärke zum vollständigen Ablauf ihrer geordneten Reaktion gezwungen werden und daß die dadurch zurückgewonnene elektrische Energie zur Unterstützung der Elektrolyse und zur Erhöhung ihrer Stromausbeute und ihres Gesamtwirkungsgrades herangezogen wird.

3. Elektro-chemische Zelle mit einem Elektrolyten (1), einer Sauerstoffelektrode (2), einer Brennstoffelektrode (3) sowie mit die Stromzuführung und Stromabführung zu den Elektroden (2,3) bewerkstelligenden Stromkollektoren (4,5) und diesen außenrandseitig zugeordneten Bipolarplatten (6,7),
dadurch gekennzeichnet,
daß die Elemente (1-6) der elektrochemischen Zelle bis zu deren äußeren Kante (9) unter Bildung einer von der unmittelbaren Zufuhr von Stoffströmen freigehaltenen, Leckageströme der Reaktanden erlaubenden Randpartie (10) geführt sind und mit der äußeren Kante (9) bündig abschließen zur Ermöglichung einer elektrochemischen Reaktion in dieser Randpartie (10), wobei die Randpartie (10) eine solche Breite aufweist, daß die sich abspielenden elektro-chemischen Reaktionen bei Erreichen der Kante (9) vollständig zum Abschluß gelangt sind.

4. Vorrichtung zur Durchführung des Verfahrens nach den Ansprüchen 1 und 2,
dadurch gekennzeichnet,
daß sie aus einer Mehrzahl elektro-chemischer Zellen nach Anspruch 3 gebildet ist.

5. Vorrichtung nach Anspruch 4, dadurch gekennzeichnet, dass als elektrochemische Zelle(n) eine aus plattenförmigen Bauelementen bestehende Hochtemperatur-Brennstoffzelle mit dotiertem und stabilisiertem ZrO₂ als Feststoffelektrolyt oder ein Stapel einer Vielzahl gleichartiger Brennstoffzellen mit Kammern für die gasförmigen Medien bildenden separierenden Bipolarplatten (6; 7) vorliegt, dass der zugeführte Sauerstoffträger auf der Seite der Sauerstoffelektrode (2) Luft, technisch reiner Sauerstoff oder an Sauerstoff angereicherte Luft und der zugeführte gasförmige Brennstoff auf der Seite der Brennstoffelektrode (3) H₂, CO, CH₄, CₙHₘ oder eine Mischung aus mindestens zweien der vorgenannten Stoffe ist und dass ferner der Abstand zweier eine Brennstoffzelle begrenzenden Bipolarplatten (6; 7) senkrecht zur Plattenebene höchstens 5 mm und die durch die Grenzfläche (8) und die äussere Kontur der Kante bestimmte Breite der Randpartie (10) der Bipolarplatten (6; 7) mindestens 5 mm beträgt.

6. Vorrichtung nach Anspruch 4, dadurch gekennzeichnet, dass als elektrochemische Zelle(n) eine aus plattenförmigen Bauelementen bestehende Brennstoffzelle mit perfluoriertem sulfoniertem organischen Kationenaustauscher-Polymer in Membranform als Feststoffelektrolyt oder ein Stapel einer Vielzahl gleichartiger Brennstoffzellen mit Kammern für die gasförmigen Medien und Kanälen für den Wasserabfluss bildenden separierenden Bipolarplatten (6; 7) vorliegt, dass der zugeführte Sauerstoffträger auf der Seite der Sauerstoffelektrode (2) Luft, technisch reiner Sauerstoff oder an Sauerstoff angereicherte Luft und der zugeführte gasförmige Brennstoff auf der Seite der Brennstoffelektrode (3) H₂ ist, und dass zwecks Zusammenhaltens des aus dem Reaktionsprodukt gebildeten Wassermantels (22) in unmittelbarer Nähe der äusseren Begrenzung der Brennstoffzelle(n) eine wasserdichte Umhüllung (23) mit nach innen gerichteten umlaufenden Rippen in Form eines Labyrinths, deren Ebenen parallel zur Plattenebene stehen, angeordnet ist und dass ferner der Abstand zweier eine Brennstoffzelle begrenzenden Bipolarplatten (6; 7) senkrecht zur Plattenebene höchstens 5 mm und die durch die Grenzfläche (8) und die äussere Kontur der Kante bestimmte Breite der Randpartie (10) der Bipolarplatten (6; 7) mindestens 5 mm beträgt.

7. Vorrichtung nach Anspruch 4, dadurch gekennzeichnet, dass als elektrochemische Zelle(n) eine aus plattenförmigen Bauelementen bestehende Brennstoffzelle mit in einem Vlies (24) aus einem keramischen Stoff auf SiO₂-Basis als Gerüst festgehaltenen Flüssigelektrolyten in Form von H₃PO₄ oder ein Stapel einer Vielzahl gleichartiger Brennstoffzellen mit Kammern für die gasförmigen Medien bildenden separierenden Bipolarplatten (6; 7) vorliegt, dass der zugeführte Sauerstoffträger auf der Seite der Sauerstoffelektrode (2) Luft, technisch reiner Sauerstoff oder an Sauerstoff angereicherte Luft und der zugeführte gasförmige Brennstoff auf der Seite der Brennstoffelektrode (3) H₂ ist, und dass in unmittelbarer Nähe der Begrenzung der Brennstoffzelle(n) für jede Zelle ein am Rand des Elektrolyten (1) bündig und dicht anschliessender Rahmen zur Abdichtung und Zurückhaltung des letzteren, bestehend aus keramischem Material auf SiO₂-Basis angeordnet ist und dass ferner der Abstand zweier eine Brennstoffzelle begrenzenden Bipolarplatten (6; 7) senkrecht zur Plattenebene höchstens 8 mm und die durch die Grenzfläche (8) und die äussere Kontur der Kante bestimmte Breite der Randpartie (10) der Bipolarplatten (6; 7) mindestens 10 mm beträgt.

8. Vorrichtung nach Anspruch 4, dadurch gekennzeichnet, dass als elektrochemische Zelle(n) eine aus plattenförmigen Bauelementen bestehende Brennstoffzelle mit in einem Vlies (26) aus einem keramischen Stoff als Gerüst festgehaltenem Flüssigelektrolyten in Form einer eutektischen Schmelze von Li₂CO₃ und K₂CO₃ oder ein Stapel einer Vielzahl gleichartiger Brennstoffzellen mit Kammern für die gasförmigen Medien bildenden separierenden Bipolarplatten (6; 7) vorliegt, dass der zugeführte Sauerstoffträger auf der Seite der Sauerstoffelektrode (2) Luft, technisch reiner Sauerstoff oder an Sauerstoff angereicherte Luft und der zugeführte gasförmige Brennstoff auf der Seite der Brennstoffelektrode (3) H₂ oder CO ist, und dass in unmittelbarer Nähe der Begrenzung der Brennstoffzelle(n) für jede Zelle ein am Rand des Elektrolyten (1) bündig und dicht anschliessender Rahmen zur Abdichtung und Zurückhaltung des letzteren, bestehend aus keramischem Material auf Al₂O₃-Basis angeordnet ist und dass ferner der Abstand zweier eine Brennstoffzelle begrenzenden Bipolarplatten (6; 7) senkrecht zur Plattenebene höchstens 7 mm und die durch die Grenzfläche (8) und die äussere Kontur der Kante bestimmte Breite der Randpartie (10) der Bipolarplatten (6; 7) mindestens 10 mm beträgt.

9. Vorrichtung nach Anspruch 4, dadurch gekennzeichnet, dass als elektrochemische Zelle(n), eine aus plattenförmigen Bauelementen bestehende Brennstoffzelle mit durch ein trennendes Diaphragma (29) aus Asbest oder aus einem keramischen Stoff in zwei Räumen festgehaltenen Flüssigelektrolyten in Form einer wässrigen KOH-Lösung oder ein Stapel einer Vielzahl gleichartiger Brennstoffzellen mit Kammern für die gasförmigen Medien bildenden separierenden Bipolarplatten (6; 7) vorliegt, dass der zugeführte Sauerstoffträger auf der Seite der Sauerstoffelektrode (2) Luft, technisch reiner Sauerstoff oder an Sauerstoff angereicherte Luft und der zugeführte gasförmige Brennstoff auf der Seite der Brennstoffelektrode (3) H₂ ist, und dass in unmittelbarer Nähe der Begrenzung der Brennstoffzelle(n) für jede Zelle ein am Rand des Elektrolyten (1) bündig und dicht anschliessender Rahmen zur Abdichtung und Zurückhaltung des letzteren, bestehend aus laugenbeständigem Kunststoff angeordnet ist und dass ferner der Abstand zweier eine Brennstoffzelle begrenzenden Bipolarplatten (6; 7) senkrecht zur Plattenebene höchstens 10 mm und die durch die Grenzfläche (8) und die äussere Kontur der Kante bestimmte Breite der Randpartie (10) der Bipolarplatten (6; 7) mindestens 15 mm beträgt.

## Claims

1. A method of reducing energy losses which occur as a result of leaks in the edge regions of electrochemical cells due to the escape of substance flows not subjected to the electrochemical reaction, characterised in that the edge region (10) of the electrochemical cell has the form of an unsealed, electrically conductive zone from which the direct supply of substance flows is withheld and that, with the deliberate acceptance of leaks, leakage flows of the reactants, namely the oxygen carrier and the fuel, are conducted through the edge region, where the geometric dimension of the edge region(s) (10) is selected such that the leakage flows (17, 18; 21; 27) reaching the exterior are no longer capable of a residual, undesired, unordered reaction, no longer have any intrinsic chemical potential and overall no longer have an energy content representing a loss, due to the continuation and full completion of the reaction in the edge region (10).

2. A method according to Claim 1, characterised in that in an electrochemical cell used for electrolysis, the edge region (10), which forms a closed frame and is electrically completely isolated from the active electrolysis section by an all-round insulating gap, is operated as fuel cell such that the leakage flows of the reactants, oxygen carrier and fuel, issuing outwards from the active electrolysis section are compelled, under the influence of the electric field strength, to fully complete their ordered reaction, and that the thereby recovered electric energy is used to promote the electrolysis and to increase the current yield and overall efficiency thereof.

3. An electrochemical cell comprising an electrolyte (1), an oxygen electrode (2), a fuel electrode (3), current collectors (4, 5) which supply and discharge current to/from the electrodes (2, 3), and bipolar plates (6, 7) assigned to said current collectors at the outer edge, characterised in that the elements (1 - 6) of the electrochemical cell extend up to its outer edge (9) thereby forming an edge region (10), from which the direct supply of substance flows is withheld and which allows leakage flows of the reactants, and flush with said outer edge (9) in order to permit an electrochemical reaction in this edge region (10), said edge region (10) having a width such that the electrochemical reactions which take place have been fully completed upon the reaching of the edge (9).

4. A device for the implementation of the method according to Claims 1 and 2, characterised in that it is formed by a plurality of electrochemical cells according to Claim 3.

5. A device according to Claim 4, characterised in that a high-temperature fuel cell composed of plate-like components comprising doped and stabilized ZrO₂ as solid electrolyte, or a stack of a plurality of fuel cells of the same type composed of separating bipolar plates (6; 7) forming chambers for the gaseous media is/are provided as electrochemical cell(s), that the supplied oxygen carrier on the side of the oxygen electrode (2) is air, technical oxygen or oxygen-enriched air, and the supplied gaseous fuel on the side of the fuel electrode (3) is H₂, CO, CH₄, CₙHₘ or a mixture of at least two of the forementioned substances, and that moreover the distance between two bipolar plates (6; 7) delimiting a fuel cell at right angles to the plane of the plates is a maximum of 5 mm, and the width of the edge region (10) of the bipolar plates (6; 7) defined by the boundary surface (8) and the outer contour of the edge amounts to at least 5 mm.

6. A device according to Claim 4, characterised in that a fuel cell composed of plate-like components comprising perfluorinated, sulphonated organic cation-exchange polymer in membrane form as solid electrolyte, or a stack of a plurality of fuel cells of the same type composed of separating bipolar plates (6; 7) forming chambers for the gaseous media and channels for the water outflow is/are provided as electrochemical cell(s), that the supplied oxygen carrier on the side of the oxygen electrode (2) is air, technical oxygen or oxygen-enriched air, and the supplied gaseous fuel on the side of the fuel electrode (3) is H₂, and that for the cohesion of the water jacket (22) formed from the reaction product in the direct vicinity of the outer boundary of the fuel cell(s) there is arranged a watertight casing (23) having inwardly directed, peripheral ribs in the form of a labyrinth, the planes of which extend in parallel to the plane of the plates, and that moreover the distance between two bipolar plates (6; 7) delimiting a fuel cell at right angles to the plane of the plates is a maximum of 5 mm, and the width of the edge region (10) of the bipolar plates (6; 7) defined by the boundary surface (8) and the outer contour of the edge amounts to at least 5 mm.

7. A device according to Claim 4, characterised in that a fuel cell composed of plate-like components comprising liquid electrolyte in the form of H₃PO₄ retained in a fleece (24) consisting of a SiO₂-based ceramic material as frame, or a stack of a plurality of fuel cells of the same type composed of separating bipolar plates (6; 7) forming chambers for the gaseous media is/are provided as electrochemical cell(s), that the supplied oxygen carrier on the side of the oxygen electrode (2) is air, technical oxygen or oxygen-enriched air, and the supplied gaseous fuel on the side of the fuel electrode (3) is H₂, and that in the direct vicinity of the boundary of the fuel cell(s) for each cell there is arranged a frame which flushes in sealed manner with the edge of the electrode (1), serves to seal and retain said electrolyte and consists of SiO₂-based ceramic material, and that moreover the distance between two bipolar plates (6; 7) delimiting a fuel cell at right angles to the plane of the plates is a maximum of 8 mm, and the width of the edge region (10) of the bipolar plates (6; 7) defined by the boundary surface (8) and the outer contour of the edge is at least 10 mm.

8. A device according to Claim 4, characterised in that a fuel cell composed of plate-like components comprising liquid electrolyte in the form of an eutectic melt of Li₂CO₃ and K₂CO₃ retained in a fleece (26) consisting of a ceramic material as frame, or a stack of a plurality of fuel cells of the same type composed of separating bipolar plates (6; 7) forming chambers for the gaseous media is/are provided as electrochemical cell(s), that the supplied oxygen carrier on the side of the oxygen electrode (2) is air, technical oxygen or oxygenenriched air, and the supplied gaseous fuel on the side of the fuel electrode (3) is H₂ or CO, and that in the direct vicinity of the boundary of the fuel cell(s) for each cell there is arranged a frame which flushes in sealed manner with the edge of the electrolyte (1), serves to seal and retain said electrolyte and consists of Al₂O₃-based ceramic material, and that moreover the distance between two bipolar plates (6; 7) delimiting a fuel cell at right angles to the plane of the plates is a maximum of 7 mm, and the width of the edge region (10) of the bipolar plates (6; 7) defined by the boundary surface (8) and the outer contour of the edge is at least 10 mm.

9. A device according to Claim 4, characterised in that a fuel cell composed of plate-like components comprising liquid electrolyte in the form of an aqueous KOH solution retained in two chambers by a separating diaphragm (29) consisting of asbestos or a ceramic material, or a stack of a plurality of fuel cells of the same type composed of separating bipolar plates (6; 7) forming chambers for the gaseous media is/are provided as electrochemical cell(s), that the supplied oxygen carrier on the side of the oxygen electrode (2) is air, technical oxygen, or oxygen-enriched air, and the supplied gaseous fuel on the side of the fuel electrode (3) is H₂, and that in the direct vicinity of the boundary of the fuel cell(s) for each cell there is arranged a frame which flushes in sealed manner with the edge of the electrolyte (1), serves to seal and retain said electrolyte and consists of alkaliresistant plastics material, and that moreover the distance between two bipolar plates (6; 7) delimiting a fuel cell at right angles co the plane of the plates is a maximum of 10 mm, and the width of the edge region (10) of the bipolar plates (6, 7) defined by the boundary surface (8) and the outer contour of the edge amounts to at least 15 mm.

## Revendications

1. Procédé pour réduire des pertes d'énergie, qui apparaissent en raison de défauts d'étanchéité des parties de bord de cellules électrochimiques en raison de la sortie d'écoulements de substances non soumis à la réaction électrochimique,
caractérisé en ce
que la partie de bord (10) de la cellule électrochimique est agencée sous la forme d'une zone électriquement conductrice, non étanchéifiée et est maintenue à l'écart de l'introduction directe d'écoulements de substances, et que, moyennant l'acceptation voulue d'un défaut d'étanchéité, des courants de fuite des réactants, à savoir le porteur d'oxygène et le combustible, sont guidés à travers la partie de bord, les dimensions géométriques de la ou des parties de bord (10) étant choisies de telle sorte que les courants de fuite (17, 18 ; 21 ; 27) qui parviennent à l'extérieur, ne peuvent pas conduire à une réaction secondaire indésirable encore subsistante, ne possèdent plus aucun potentiel chimique propre et ne possèdent plus globalement aucun contenu en énergie, représentant une perte, sous l'effet de la poursuite et de l'achèvement complet de la réaction dans la partie de bord (10).

2. Procédé selon la revendication 1,
caractérisé en ce
que dans une cellule électrochimique utilisée pour l'électrolyse, la partie de bord (10), qui est complètement séparée, du point de vue électrique, de la partie active pour l'électrolyse, par une fente isolante présente de tous côtés, et forme un cadre fermé, fonctionne en tant que pile à combustible de telle sorte que les courants de fuite, qui partent en direction de l'extérieur à partir de la partie active pour l'électrolyse et sont constitués par les réactants formés par le porteur d'oxygène et le combustible, sont contraints, sous l'influence de l'intensité de champ électrique, d'exécuter complètement leur réaction régulière et que l'énergie électrique ainsi récupérée est utilisée pour assister l'électrolyse et accroître son rendement de courant et son rendement global.

3. Cellule électrochimique comportant un électrolyte (1), une électrode à oxygène (2), une électrode à combustible (3), ainsi que des collecteurs de courant (4, 5), réalisant l'envoi du courant aux électrodes (2, 3) et l'évacuation de courant à partir de ces dernières, et des plaques bipolaires (6, 7) associées à ces collecteurs de courant sur le côté du bord extérieur, caractérisé en ce que les éléments (1-6) de la cellule électrochimique s'étendent jusqu'au bord extérieur (9) de la cellule en formant une partie de bord (10), qui est maintenue à l'écart de l'arrivée directe d'écoulements de matières et permet des courants de fuite des réactants, et se terminent de niveau avec le bord extérieur (9) de manière à permettre une réaction électrochimique dans cette partie de bord (10), la partie de bord (10) possédant une largeur telle que les réactions électrochimiques, qui se déroulent, se terminent complètement en atteignant le bord (9).

4. Dispositif pour la mise en oeuvre du procédé selon l'une des revendications 1 et 2,
caractérisé en ce
qu'il est constitué par une pluralité de cellules électrochimiques selon la revendication 3.

5. Dispositif selon la revendication 4, caractérisé en ce qu'il est prévu, en tant que cellule(s) électrochimique(s), une pile à combustible à haute température, constituée de composants en forme de plaques et comportant du ZrO₂ dopé et stabilisé en tant qu'électrolyte solide, ou un empilage d'une multiplicité de piles à combustible identiques comportant des plaques bipolaires de séparation (6 ; 7), qui forment des chambres pour les milieux gazeux, que le porteur d'oxygène introduit du côté de l'électrode à oxygène (2) est de l'air, de l'oxygène techniquement pur ou de l'air enrichi par de l'oxygène et que le combustible gazeux introduit du côté de l'électrode à combustible (3) est du H₂, du CO, du CH₄, du CₙHₘ ou un mélange d'au moins deux des substances indiquées précédemment et qu'en outre la distance entre deux plaques bipolaires (6 ; 7) délimitant une pile à combustible, qui est comptée perpendiculairement au plan des plaques, est égale au maximum à 5 mm et que la largeur, qui est déterminée par la surface limite (8) et le contour extérieur du bord, de la partie de bord (10) des plaques bipolaires (6 ; 7) est égale au moins 5 mm.

6. Dispositif selon la revendication 4, caractérisé en ce qu'il est prévu, en tant que cellule(s) électrochimique(s), une pile à combustible constituée par des composants en forme de plaques et comportant un polymère organique perfluoré et sulfoné formant échangeur de cations sous la forme d'une membrane en tant qu'électrolyte solide, ou un empilage d'une multiplicité de piles à combustible identiques comportant des plaques bipolaires de séparation (6 ; 7) qui forment des chambres pour les milieux gazeux et des canaux pour l'évacuation de l'eau, que le porteur d'oxygène introduit du côté de l'électrode à oxygène (2) est de l'air, de l'oxygène technique pur ou de l'air enrichi par de l'oxygène et que le combustible introduit sur le côté de l'électrode à combustible (3) est du H₂, et que pour le maintien à l'état assemblé de la chemise d'eau (22) formée par le produit de réaction, une enveloppe (23) étanche à l'eau, qui comporte des nervures périphériques dirigées vers l'intérieur sous la forme d'un labyrinthe et dont les plans sont parallèles au plan des plaques, est disposée à proximité directe de la limite extérieure de la ou des piles à combustible, et qu'en outre la distance entre deux plaques bipolaires (6 ; 7), délimitant une pile à combustible, qui est comptée perpendiculairement au plan des plaques, est égale au maximum à 5 mm et que la largeur, qui est déterminée par la surface limite (8) et le contour extérieur du bord, de la partie de bord (10) des plaques bipolaires (6 ; 7) est égale au moins à 5 mm.

7. Dispositif selon la revendication 4, caractérisé en ce qu'il est prévu, comme cellule(s) électrochimique(s), une pile à combustible constituée par les composants en forme de plaques et comportant un électrolyte liquide formé de H₃PO₄, qui est retenu fixe dans une nappe (24) formée d'un matériau céramique à base de SiO₂, en tant qu'ossature, ou un empilage d'une multiplicité de piles à combustible identiques comportant des plaques bipolaires de séparation (6 ; 7) formant des chambres pour les milieux gazeux, que le porteur d'oxygène envoyé du côté de l'électrode à oxygène (2) est de l'air, de l'oxygène technique pur ou de l'air enrichi par de l'oxygène et que le combustible gazeux introduit du côté de l'électrode à combustible (3) est du H₂, et qu'à proximité directe de la limite de la ou des piles à combustible est disposé, pour chaque pile, un cadre, qui se termine de niveau et se raccorde de manière étanche sur le bord de l'électrolyte (1), sert a renfermer de façon étanche et à retenir l'électrolyte et est constitué par un matériau céramique à base de SiO₂, et qu'en outre la distance entre deux plaques bipolaires (6 ; 7) délimitant une pile à combustible, qui est comptée perpendiculairement au plan des plaques, est égale au maximum à 8 mm et que la largeur, qui est déterminée par la surface limite (8) et le contour extérieur du bord, de la partie de bord (10) des plaques bipolaires (6 ; 7) est égale au moins à 10 mm.

8. Dispositif selon la revendication 4, caractérisé en ce qu'il est prévu, comme cellule(s) électrochimique(s) une pile à combustible constituée par des composants en forme de plaques et comportant un électrolyte liquide retenu dans une nappe (26) formée d'un matériau céramique, en tant qu'ossature et se présentant sous la forme d'une masse fondue eutectique Li₂CO₃ et de K₂CO₃, ou un empilage d'une multiplicité de piles à combustible identiques comportant des plaques bipolaires de séparation (6 ; 7) formant des chambres pour les milieux gazeux, que le porteur d'oxygène introduit du côté de l'électrode à oxygène (2) est de l'air, de l'oxygène techniquement pur ou de l'air enrichi par de l'oxygène et que le combustible gazeux introduit du côté de l'électrode à combustible (3) est du H₂ ou du CO, et qu'à proximité directe de la limite de la ou des piles à combustible est disposé, pour chaque pile, un cadre, qui se termine de niveau et se raccorde de manière étanche sur le bord de l'électrolyte (1), sert à renfermer de façon étanche et à retenir l'électrolyte, et est constitué par un matériau céramique à base de Al₂O₃, et qu'en outre la distance entre deux plaques bipolaires (6 ; 7) délimitant une pile à combustible, qui est comptée perpendiculairement au plan des plaques, est égale au maximum à 7 mm et que la largeur, qui est déterminée par la surface limite (8) et le contour extérieur du bord, de la partie de bord (10) des plaques bipolaires (6 ; 7) est égale au moins à 10 mm.

9. Dispositif selon la revendication 4, caractérisé en ce qu'il est prévu, comme cellule(s) électrochimique(s), une pile à combustible constituée par des composants en forme de plaque et comportant un électrolyte liquide qui est retenu dans deux chambres au moyen d'un diaphragme de séparation (29) formé d'amiante ou d'un matériau céramique et se présente sous la forme d'une solution aqueuse de KOH, ou un empilage d'une multiplicité de piles à combustibles identiques comportant des plaques bipolaires de séparation (6 ; 7) formant des chambres pour les milieux gazeux, que le porteur d'oxygène introduit du côté de l'électrode à oxygène (2) est de l'air, de l'oxygène techniquement pur ou de l'air enrichi par de l'oxygène et que le combustible gazeux introduit du côté de l'électrode à combustible (3) est du H₂ ou du CO, et qu'à proximité directe de la limite de la ou des piles à combustible est disposé, pour chaque pile, un cadre, qui se termine de niveau et de manière étanche sur le bord de l'électrolyte (1), sert à renfermer de manière étanche et à retenir l'électrolyte et est constitué par une matière plastique résistante à la lessive, et qu'en outre 1a distance entre deux plaques bipolaires (6 ; 7) délimitant une pile à combustible, qui est comptée perpendiculairement au plan des plaques, est égale au maximum à 10 mm et que la largeur, qui est déterminée par la surface limite (8) et le contour extérieur du bord, de la partie de bord (10) des plaques bipolaires (6 ; 7) est égal au moins à 15 mm.
